# EUROPÄISCHE PATENTSCHRIFT

(11) **EP 0 968 151 B1**
(45) Veröffentlichungstag und Bekanntmachung des Hinweises auf die Patenterteilung: **17.10.2001**
(21) Anmeldenummer: 98913564.5
(22) Anmeldetag: 19.02.1998
(51) Int. Cl.: C04B 35/573, C04B 35/80, F16D 69/02

(54) **SCHMELZINFILTRIERTE FASERVERSTÄRKTE VERBUNDKERAMIK**
FIBRE-REINFORCED COMPOSITE CERAMICS INFILTRATED WITH MOLTEN METAL
CERAMIQUE COMPOSITE RENFORCEE PAR FIBRES, INFILTREE AVEC UNE MATIERE FONDUE

(30) Priorität: 21.03.1997 DE 19711831
(43) Veröffentlichungstag der Anmeldung: 05.01.2000
(73) Patentinhaber: DaimlerChrysler AG, 70567 Stuttgart (DE)
(72) Erfinder: GADOW, Rainer, D-84544 Aschau am Inn (DE); HAUG, Tilmann, D-88690 Uhldingen (DE); KIENZLE, Andreas, D-70619 Stuttgart (DE)
(86) Internationale Anmeldenummer: EP9800951
(87) Internationale Veröffentlichungsnummer: WO9842634

(56) Entgegenhaltungen:
- EP-A- 0 798 280
- US-A- 5 079 195

## Beschreibung

Die Erfindung betrifft eine schmelzinfiltrierte faserverstärkte Verbundkeramik mit hochwarmfesten Fasern, insbesondere auf der Basis von Si/C/B/N, die mit einer Matrix auf Si-Basis, welche mindestens einen Zusatz eines anderen Stoffes enthält, reaktionsgebunden sind, sowie ein Verfahren zur Herstellung einer solchen Verbundkeramik.

Ein derartiges Verfahren und eine derartige Verbundkeramik sind aus der US-A-5 464 655 bekannt.

Kohlenstoffaserverstärkter Kohlenstoff (C/C, auch bezeichnet als CFRC oder im deutschen Sprachgebrauch als CFC) ist die erste industriell erfolgreiche Entwicklung in der Gruppe der faserverstärkten Verbundkeramikwerkstoffe.

Jüngst entwickelte Hochleistungsbremssysteme auf Basis von CFC-Bremsscheiben mit speziell entwickelten Reibbelägen, die etwa im automobilen Rennsport eingesetzt werden, können nur mit zahlreichen Imprägnier- bzw. Carbonisierungs- und Graphitierungszyklen hergestellt werden, so daß es sich um ein äußerst zeit-, energie- und kostenintensives Herstellverfahren handelt, wobei der Fertigungsprozeß mehrere Wochen oder Monate dauern kann. Darüber hinaus bieten CFC-Bremsscheiben für den Einsatz in gering belasteten Serienfahrzeugen unter Einfluß von Feuchtigkeit und Betriebsbedingungen bei tiefen Temperaturen völlig unzureichende Bremseigenschaften. Dies äußert sich unter anderem in einem ausgeprägt unstetigen Verhalten der Reibwerte in Abhängigkeit von der Betriebstemperatur und der Oberflächenbelegung, was eine Regelung, wie bisher bei 4-Kanal-ABS-Systemen üblich, außerordentlich erschwert oder gar unmöglich macht. Vor diesem Hintergrund wird versucht, verbesserte faserverstärkte Verbundkeramikwerkstoffe zu entwickeln, die bspw. als Bremsscheiben für Hochleistungsbremssysteme bei Kraftfahrzeugen oder bei Schienenfahrzeugen verwendet werden können. Darüber hinaus sind derartige faserverstärkte Verbundkeramikwerkstoffe auch für zahlreiche andere Anwendungen von Interesse, wie etwa als Turbinenwerkstoffe oder als Gleitlagerwerkstoffe.

Zwar ist siliziuminfiltriertes reaktionsgebundenes Siliziumcarbid (SiSiC) mit Siliziummassenanteilen (d.h. freies Silizium) zwischen 2 % und 15 % seit den 60er Jahren bekannt und für mancherlei Anwendungen im Bereich der Wärmetechnik auch marktgängig eingeführt. Bei der Herstellung von größerformatigen und dickwandigen Bauteilen ergeben sich jedoch Probleme bezüglich innerer Spannungen (Abkühleinspannung) aufgrund einer sprunghaften Volumenzunahme des halbmetallischen Siliziums bei dessen Erstarrung im Werkstoffgefüge. Die Verspannung des erstarrten Siliziums äußert sich in vielen Fällen in der Ausbildung von Mikrorissen und der Verringerung der Haftung an inneren Grenzflächen, so daß die Festigkeit des Werkstoffs reduziert wird und ein kritisches Rißausbreitungsverhalten unter thermischer und mechanischer Wechselbeanspruchung insbesondere bei Langzeitanwendungen zu erwarten ist. In der Fertigung führt die Volumenexpansion beim Erstarren zu Schwierigkeiten, wie sie etwa beim Einfrieren von Wasser in geschlossenen Leitungssystemen hinlänglich bekannt sind, d.h. zum Bersten und Reißen der Bauteile und somit zu hohen Ausschußraten. Außerdem ist die Herstellung von SiSiC-Werkstoffen relativ aufwendig und teuer.

Aus der US 5 079 195 A ist ein verfahren bekannt, bei dem ein kohlenstoffhaltiger Vorkörper mit einer Siliziumschmelze infiltriert wird, welche mit mindestens einem Element legiert ist, welches im wesentlichen unlöslich in Silizium ist und welches hochschmelzende Phasen bildet, nämlich Molybdän, Wolfram, Rhenium, Hafnium, Zirkon, Chrom, Bor und Titan. Auf diese Weise verbleibt nur ein Minimum an freiem Silizium im Verbundkörper. Dadurch wird die Gefahr der Rißbildung in dem Material herabgesetzt und die Temperaturbeständigkeit erhöht, so daß das Material mechanisch und thermisch beständiger wird.

Aus der EP 0 798 280 A2 ist ein keramischer Verbundwerkstoff bekannt, welcher hochtemperaturbeständig ist und Siliziumcarbid und Molybdänsilizid enthält.

Die Aufgabe der vorliegenden Erfindung besteht demnach darin, eine verbesserte faserverstärkte Verbundkeramik mit hochwarmfesten Fasern sowie ein Verfahren zur Herstellung einer solchen zu schaffen, womit eine möglichst einfache und kostengünstige Herstellung von Großserienbauteilen wie etwa Bremsscheiben ermöglicht ist, wobei eine hohe Temperaturbeständigkeit und Warmfestigkeit bei einer ausreichenden Oxidationsbeständigkeit und Thermoschockbeständigkeit vorausgesetzt ist.

Die Aufgabe der Erfindung wird dadurch gelöst, daß bei einer schmelzinfiltrierten faserverstärkten Verbundkeramik gemäß der eingangs genannten Art die Matrix Zusätze von Eisen enthält.

Die Aufgabe der Erfindung wird auf diese Weise vollkommen gelöst. Erfindungsgemäß wurde nämlich erkannt, daß durch diese Maßnahme auf besonders kostengünstige und umweltfreundliche Weise die bei reinem Silizium auftretende Volumenzunahme vermieden werden kann, wobei Eisenzusätze gleichzeitig zu einem verbesserten Bremsverhalten bei einer Anwendung als Bremsscheibe führen, da sich mit herkömmlichen Bremsbelägen, die auf Bremsscheiben auf Graugußbasis abgestimmt sind, eine verbesserte Reibpaarung ergibt. Bremssysteme auf der Basis von solchen Bremsscheiben werden somit besser regelbar, da sie darüber hinaus auch weniger feuchtigkeitsempfindlich und unempfindlich gegenüber niedrigen Temperaturen sind. Auch kommen keine kritischen Flächenpressungen wie bei CFC-Bremsscheiben vor, die eine Regelbarkeit negativ beeinflussen. Darüber hinaus wird der Herstellungsprozeß durch die durch den Eisenzusatz bedingte Schmelzpunkterniedrigung vereinfacht und kostengünstiger gestaltet.

Durch die Legierung der zur Schmelzinfiltration verwendeten Siliziumschmelze mit Eisen kann die sprunghafte Volumenzunahme bei der Erstarrung einer reinen Siliziumschmelze reduziert oder sogar weitgehend vermieden werden. Auf diese Weise werden die durch die Verspannung des erstarrten Siliziums bedingten Probleme vermieden, eine höhere Festigkeit, insbesondere bei thermischer und mechanischer Wechselbeanspruchung erreicht und gleichzeitig das Herstellverfahren einfacher und kostengünstiger gestaltet.

Jedoch läßt sich auch durch Zusätze von Chrom, Titan, Aluminium, Nickel oder Molybdän in einem Zweistoffsystem mit Silizium die zuvor erwähnte Volumenzunahme beim Erstarren einer reinen Siliziumschmelze vermeiden oder zumindest abschwächen. Weiterhin ergibt sich in den meisten Fällen eine Schmelzpunkterniedrigung, wodurch die Fertigung vereinfacht und kostengünstiger gestaltet wird. Darüber hinaus können Zusätze von Chrom, Titan, Molybdän, Nickel oder Aluminium die Ausbildung von Passivierungsschutzschichten bewirken, so daß die Oxidations- und Korrosionsbeständigkeit verbessert wird.

Aus diesem Grunde ist es bevorzugt, einer Matrix auf Si-Basis, die Eisenzusätze enthält, noch weitere Zusätze von Chrom, Titan, Aluminium, Nickel oder Molybdän in einem geeigneten Verhältnis als Passivierungsschichtbildner zuzusetzen. Dabei führen unterschiedliche thermische Ausdehnungkoeffizienten der Legierungskomponenten zu Spannungszuständen in der Matrix, die die durch die Fasern bedingten Spannungen bei der Abkühlung kompensieren.

In weiterer Ausgestaltung der Erfindung ist die Matrix aus einer Siliziumlegierung hergestellt, die 0,5 bis 80 Gew.-% Eisen enthält, vorzugsweise etwa 5 bis 50 Gew.-% (bezogen auf die Gesamtmasse der Legierung). Da Ferrosilizium in gleichmäßig reiner Form großtechnisch in der Stahlerzeugung eingesetzt wird, wobei Qualitäten von Pe25Si75 und Fe35Si65 kommerziell erhältlich sind, ergibt sich eine erhebliche Reduzierung der Rohstoffkosten gegenüber der Verwendung von reinem Silizium. Darüber hinaus ergibt sich eine Schmelzpunkterniedrigung bei Fe25Si75 von etwa 1 410°C bei reinem Silizium auf etwa 1 340°C bzw. auf etwa 1 275°C bei Verwendung von FE35Si65.

In zusätzlicher Weiterbildung der Erfindung werden der Siliziumschmelze, die zur Schmelzinfiltration verwendet wird, noch zusätzlich 5 bis 30 Gew.-% Chrom, vorzugsweise etwa 7 bis 12 Gew.-% Chrom zugesetzt (bezogen auf den Eisengehalt).

Durch diesen Übergang zu einem Dreistoffsystem mit Si-Fe-Cr wird ein Korrosionsschutz für die eisenhaltigen Phasen der Verbundkeramik erreicht, wobei gleichzeitig der Schmelzpunkt auf weniger als 1 400°C erniedrigt werden kann. Hierzu ist es sinnvoll, mindestens etwa 7 Gew.-% Chrom (bezogen auf den Eisengehalt) oder mehr zuzusetzen, da etwa 7 bis 8 Gew.-% Chrom erforderlich sind, um die Ausbildung einer Passivierungsschicht aus Chrom-III-Oxid zu bewirken, wie sie von Edelstählen her bekannt ist. (Bezogen auf die Gesamtmasse der Legierung ergibt sich ein Gewichtsanteil des Chroms von vorzugsweise etwa 1 bis 30 Gew.-%, vorzugsweise von etwa 1 bis 10 Gew.-%.) Aus Kostengründen ist es jedoch bevorzugt, den Chromanteil nicht unnötig hoch zu wählen. Die entsprechenden metallischen Ausgangsstoffe in Form von chromhaltigen Legierungen (z.B. FeCr) sind zwar geringfügig teurer als Eisensilizide wie FeSi oder FeSi₂, jedoch ergeben sich erhebliche Vorteile durch die verbesserte Oxidationsbeständigkeit.

Zur Faserverstärkung kommen zahlreiche hochwarmfeste Fasern, insbesondere auf der Basis von Si/C/B/N mit kovalenter Bindung in Frage, wobei C-Fasern und SiC-Fasern zu den bekanntesten Fasern gehören, die für die erfindungsgemäße Keramik geeignet sind. Daneben ist für besonders preiswerte Produkte auch eine Verwendung etwa von Aluminiumoxid-Fasern denkbar.

In zusätzlicher Weiterbildung der Erfindung sind die Fasern zu Faserbündeln zusammengefaßt und oberflächenimprägniert.

Auf diese Weise können kommerziell erhältliche Rovings und Multifilamentstränge (z.B. sogenannte 12K-Verbunde) verwendet werden. Diese werden zweckmäßigerweise an ihrer Oberfläche imprägniert, z.B. durch Pech, um die Faserstoffbündel bei der Herstellung mechanisch zu schützen und um eine übermäßige Reaktion und damit Schädigung bei der Siliziuminfiltration durch Bildung einer die Fasern schützenden Kohlenstoffschicht, die zu SiC abreagieren kann, zu vermeiden.

In weiter vorteilhafter Ausgestaltung der Erfindung sind die Fasern zu Kurzfaserbündeln zusammengefaßt und können etwa aus C-Filamenten mit mittleren Durchmessern von etwa 5 bis 12 *µ*m und einer Länge von etwa 2 bis 10 mm bestehen, die zu Faserbündeln von etwa 3.000 bis 14.000 Filamenten zusammengefaßt sind.

Derartige Kurzschnitt-Kohlenfaserstoffbündel, die zur Kurzfaserverstärkung verwendet werden, erlauben eine vereinfachte Herstellung eines Formkörpers durch Preßverfahren, ohne daß eine aufwendige Laminierung und Nachimprägnierung durchgeführt werden muß. So wird eine kostengünstige Großserienherstellung ermöglicht, wobei sich die Parameter so einstellen lassen, daß praktisch keine Schwindung auftritt und nur eine minimale Nachbearbeitung etwa durch Schleifen der Fertigbauteile erforderlich ist ("Near Net Shape Fertigung").

Hinsichtlich des Verfahrens wird die Aufgabe der Erfindung durch ein Verfahren zur Herstellung einer faserverstärkten Verbundkeramik mit hochwarmfesten Fasern, insbesondere auf der Basis von Si/C/B/N, die mit einer Matrix auf Si-Basis reaktionsgebunden sind, gelöst, das die folgenden Schritte umfaßt:
- Herstellen eines Grünlings aus Fasern unter Verwendung von Bindemitteln und Füllmitteln durch Wickeln, Laminieren oder Pressen;
- Pyrolyse des Grünlings unter Vakuum oder Schutzgas im Temperaturbereich von etwa 800°C bis 1 200°C zur Herstellung eines porösen Formkörpers;
- Infiltration des carbonisierten Formkörpers mit einer Siliziumschmelze, die Zusätze von Eisen enthält.

Wie zuvor bereits erläutert, läßt sich die Volumenvergrößerung, die bei Verwendung von reinem Silizium zur Schmelzinfiltrierung auftritt (ca. 10 Vol.-%), durch solche Zusätze erheblich vermindern oder gar vermeiden, so daß ein Werkstoff mit verbesserten Eigenschaften bei vereinfachter und kostengünstigerer Herstellung erreicht wird.

Die bei herkömmlichen faserverstärkten, reaktionsgebundenen SiC-Werkstoffen (RB-SiC) auftretenden Eigenspannungen, die zu zahlreichen Ausschußteilen bei der Herstellung führen, werden auf diese Weise reduziert bzw. weitgehend vermieden. In bevorzugter Weiterbildung der Erfindung werden der Siliziumschmelze Zusätze von Eisen und ggf. von Chrom, Titan, Aluminium, Nickel oder Molybdän als Passivierungsschichtbildner in geeigneten Mischungsverhältnissen beigemischt.

Durch Eisenzusätze im Bereich von etwa 0,5 bis 80 Gew.-% Eisen, vorzugsweise von etwa 5 bis 50 Gew.-% Eisen und ggf. Chromzusätze von 0,03 bis 40 Gew.-% Chrom, vorzugsweise von 1 bis 30 Gew.-% Chrom, insbesondere von etwa 2 bis 10 Gew.-% Chrom (bezogen auf die Gesamtmasse der Legierung), ergeben sich besonders vorteilhafte Eigenschaften, eine günstige Schmelzpunktreduzierung und eine erhebliche Verbesserung der Oxidationsbeständigkeit der eisenhaltigen Phasen durch die Bildung einer Chromoxid-Passivierungsschicht. Die vorgenannten Angaben beziehen sich jeweils auf das Gesamtgewicht des Endproduktes.

Als Fasern können bei der Herstellung beliebige hochwarmfeste Fasern, insbesondere auf der Basis Si/C/B/N mit kovalenter Bindung verwenden werden, jedoch gehören C-Fasern oder SiC-Fasern, die zu Faserbündeln zusammengefaßt und oberflächenimprägniert werden, zu den technologisch bereits bewährten und kommerziell erhältlichen Fasern, die insbesondere beim Einsatz in Form von Kurzfaserbündeln aus etwa 3.000 bis 14.000 Filamenten mit mittleren Durchmessern von etwa 5 bis 12 *µ*m und einer Länge von etwa 2 bis 10 mm, vorzugsweise von etwa 3 bis 6 mm bei einem Durchmesser der Faserbündel von etwa 0,1 mm vorteilhaft verwendbar sind.

Die Grünlinge, aus denen die porösen Formkörper bei der nachfolgenden Pyrolyse hergestellt werden, werden in zusätzlicher Weiterbildung der Erfindung durch Trocken- oder Warmfließpressen eines Granulates hergestellt, das auf besonders faserschonende Weise durch Aufbaugranulation erhalten wird.

Durch die Aufbaugranulation lassen sich die mechanisch empfindlichen Faserbündel mit den übrigen Zuschlagkomponenten zur Herstellung eines Grünlings auf besonders schonende und relativ kostengünstige Weise agglomerieren, wobei eine gute gleichmäßige Verteilung erreicht wird.

Die Aufbaugranulation kann kontinuierlich oder batchweise durchgeführt werden, wobei der Prozeß vorzugsweise derart gesteuert wird, daß eine mittlere Partikelgröße von etwa 2 bis 6 mm hergestellt wird.

Bei der Herstellung des Granulates werden in vorteilhafter Weiterbildung der Erfindung SiC-Pulver, Silizide und kohlenstoffhaltige Füllmittel, vorzugsweise Ruß und/oder Graphit, zugesetzt.

Hierbei wird vorzugsweise zunächst eine Mischung aus Kurzfaserbündeln und Füllmitteln trocken vorgemischt und anschließend in einem Pelletierteller unter Zugabe von Bindemitteln und weiterer gelöster oder dispergierter Additive zur Granulatherstellung gemischt.

Dabei hat sich eine Herstellung des Granulates aus etwa 20 bis 60 Gew.-% SiC-Pulver, etwa 2 bis 20 Gew.-% Kohlenstoff in Form von Graphit- und/oder Rußpulver, sowie etwa 10 bis 40 Gew.-% C-Faserbündeln (12K-Bündel), die trocken vorgemischt werden und denen in einem Pelletierteller etwa 15 bis 40 Gew.-% einer Binderlösung bezogen auf die gesamte Feststoffvorlage zugesetzt werden, als vorteilhaft erwiesen.

Hierbei hat sich eine wäßrige Binderlösung, die etwa 0,01 bis 10 Gew.-% Methylcelluloseester und Polyvinylalkohol enthält, als geeignetes Bindemittel erwiesen.

In vorteilhafter Weiterbildung der Erfindung wird das Granulat nach der Herstellung zunächst getrocknet, vorzugsweise auf Restfeuchtegehalte von weniger als 10 Gew.-% Wasser und dann zu Grünlingen verpreßt.

Eine sich beim Preßvorgang etwa ergebende Textur wirkt sich bei günstiger Werkzeuggestaltung vorteilhaft etwa bei der Anwendung als Bremsscheibe aus, da die C-Faserbündel ihre Vorzugslage in Erstreckungsrichtung einer flachen Scheibe annehmen, was auch der Hauptbeanspruchungsrichtung entspricht.

Solche Grünlinge werden dann in bevorzugter Weiterbildung der Erfindung in einem Pyrolyseofen oder Vakuumreaktionssinterofen unter Schutzgasatmosphäre auf etwa 950 bis 1 050°C erwärmt, um poröse Formkörper für eine nachfolgende Schmelzinfiltration herzustellen, die vorzugsweise eine Porosität von etwa 30 bis 50 % aufweisen.

Anschließend erfolgt die Schmelzinfiltration vorzugsweise mit einer Siliziumschmelze, die etwa 10 bis 50 Gew.-% Eisen und etwa 0,5 bis 10 Gew.-% Chrom mit Restsilizium (bezogen auf die Gewichtsanteile an der Legierung) enthält.

Insgesamt läßt sich so eine reproduzierbare und kostengünstige Herstellung erreichen, die für eine Großserienproduktion geeignet ist. Da praktisch keine Schwindung und Abkühleigenspannung auftritt, wird wesentlich weniger Ausschuß als bei herkömmlichen RB-SiC-Keramiken erzielt und der Nachbearbeitungsaufwand insbesondere bei eisenreichen Phasen im Gefüge erheblich reduziert.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Insbesondere sei darauf hingewiesen, daß das Verfahren der Aufbaugranulation nicht nur zur Herstellung von schmelzinfiltrierten faserverstärkten Verbundkeramiken mit hochwarmfesten Keramikfasern, die mit einer Matrix auf Si-Basis reaktionsgebunden sind, die Zusätze von Eisen, Chrom, Titan, Molybdän, Nickel oder Aluminium enthält, geeignet ist, sondern auch zur Herstellung von derartigen Verbundkeramiken, bei denen eine reine Siliziumschmelze zur Schmelzinfiltration verwendet wird, mit erheblichen Vorteilen verwendet werden kann.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: eine schematische Darstellung eines Reaktionssinterofens zur Schmelzinfiltration;
- Fig. 2: eine schematische Darstellung eines Peiletiertellers, der zur Aufbaugranulation verwendet wird, wobei die Bewegungsbahn einzelner Partikel angedeutet ist;
- Fig. 3: eine Aufsicht auf den Pelletierteller gemäß Fig. 2 von der Vorderseite;
- Fig. 4: ein lichtmikroskopisches Gefügebild einer erfindungsgemäßen Verbundkeramik und
- Fig. 5: einen Ausschnitt aus dem Gefüge gemäß Fig. 4 in vergrößerter Darstellung.

Das erfindungsgemäße Verfahren zeichnet sich dadurch aus, daß bei dem letzten Schritt zur Herstellung der faserverstärkten Verbundkeramik, bei der Schmelzinfiltration, keine reine Siliziumschmelze wie im Stand der Technik verwendet wird, sondern daß dieser Zusätze von Eisen, Chrom, Titan, Molybdän, Nickel und/oder Aluminium zugesetzt werden.

Unabhängig davon kann der poröse Formkörper, der bei der Schmelzinfiltration mit Flüssigmetall imprägniert wird, auf verschiedene Weisen hergestellt werden.

Das erfindungsgemäße Verfahren ermöglicht somit die Infiltration von C-Hartfilzen und anderen Faserverbunden, sowie eine Herstellung von 2- und 3-D endlos-faserverstärkten Keramiken.

Die Formkörper können somit etwa durch bekannte Laminiertechniken etwa unter Verwendung von Kunstharzen oder aber durch Preßverfahren hergestellt werden, wobei die Grünlinge bei der Pyrolyse in poröse Formkörper, insbesondere C-gebundene Formkörper überführt werden, die von einem vollständigen Porennetzwerk durchzogen sind und somit die flüssige Schmelze bei der nachfolgenden Schmelzinfiltration durch die dem porösen Formkörper innenwohnenden Kapillarkräfte aufsaugen, ähnlich wie bei einem Docht oder Schwamm.

Abgesehen von der herkömmlichen Laminiertechnik, die - wie oben beschrieben - auch zur Ausführung der Erfindung verwendet werden kann, ist erfindungsgemäß jedoch ein Aufbau-Granulierverfahren zur Herstellung von kurzfaserverstärkten schmelzinfiltrierten Verbundkeramiken besonders bevorzugt.

Die nachfolgende Beschreibung der Verfahrensvarianten zur Herstellung von Formkörpern bezieht sich somit lediglich auf die Herstellung von Kurzfaserkeramiken. Es sei jedoch darauf hingewiesen, daß alternativ auch herkömmliche Laminierverfahren verwendet werden können.

### Beispiel 1

Die verwendeten Ausgangsmaterialien sind in Tabelle 1 zusammengefaßt.

**Tabelle 1**

| Verbindung | Bezeichnung | Bezugsquelle | Daten |
|---|---|---|---|
| SiC | SM93 | Industriekeramik hochrein | S_{M}03:3,1 m²/g |
| Ruß | Printex 140 U | Degussa | |
| Graphit | KS 6 | Timcal | |
| C-Kurzfaserbündel | | SGL-Carbon | 3mm, 12000 Fil. |
| Methylcellulose-ester | Tylose 4000 G4 | Hoechst | |
| Polyvinylalkohol | Moviol 10-74 | Hoechst | |
| FeSi(65 od. 75) | FeSi75 bzw. FeSi65 | FESIL | 5-30 mm Körnung |
| FeCr(65 Ma% Cr) | Ferrochrom affine | FESIL | 5-30 mm Körnung |

### 1.1 Aufbaugranulation

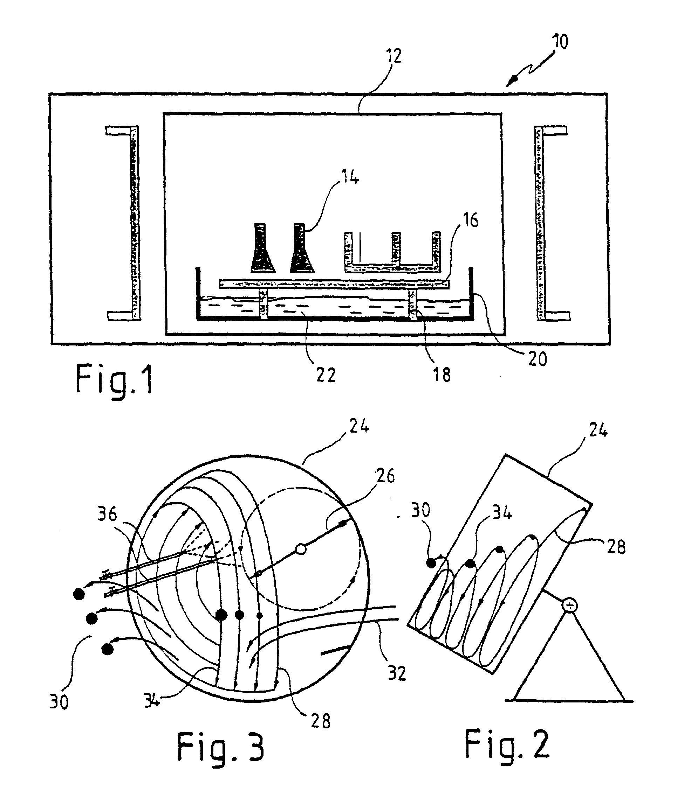

In einem Taumelmischer wurden 344 g SiC-Pulver, 48 g Graphit-Pulver und 8 g Ruß drei Stunden lang intensiv mit 50 U/min vermischt. Anschließend wurden 200 g von mit Pech beschichteten C-Kurzfaserbündeln hinzugegeben und fünf Minuten mit 10 U/min in die Pulvermischung eingemischt. Diese Mischung wurde in einen Pelletierteller 24 gemäß den Fig. 2 und 3 überführt und bei 30 U/min und einem Tellerneigungswinkel von ungefähr 40° in eine Roll-Mischbewegung versetzt. Aus Sprühleitungen 36 wurde über Düsen 240 g der wäßrigen Binderlösung gemäß Tabelle 1 bestehend aus 1 Gew.-% Tylose 4000 G4 und 0,5 Gew.-% Moviol 10-74 gelöst in demineralisiertem Wasser in einem Zeitraum von 3 Minuten zugesprüht.

In den Fig. 2 und 3 sind die Bewegungsbahnen kleiner Teilchen mit 28 und größerer Teilchen mit 34 schematisch angedeutet. Eine zusätzliche Vermischung kann durch einen Zusatzmischteller 26 gemäß Fig. 3 erreicht werden. Bei diesem Verfahren der Aufbaugranulation kann die Verteilung der Komponenten im sich bildenden Granulat sowie die Granulatgröße durch eine Variation verschiedener Parameter beeinflußt werden, wie etwa Drehzahl und Neigungswinkel des Pelletiertellers 24, Drehzahl des Zusatzmischtellers 26, Ort der Sprühdüsen zum Einführen der Binderlösung, Art und Dosierung der Binderlösung etc.

Insgesamt kann die Aufbaugranulation so eingestellt werden, daß sich eine die Kohlenfaserstoffbündel schonende Granulatbildung bei einer gleichmäßigen homogenen Verteilung der Einzelkomponenten ergibt. Das hergestellte Granulat weist vorzugsweise eine Teilchengröße zwischen etwa 3 und 6 mm auf.

Die Aufbaugranulierung kann entweder batchweise durchgeführt werden, wobei das erhaltene Granulat anschließend zur Gewinnung der gewünschten Teilchengrößenfraktion ausgesiebt wird, oder aber kontinuierlich durchgeführt werden, wie in Fig. 3 dargestellt ist. Dabei wird kontinuierlich gemäß Ziffer 32 trockene Mischsubstanz eingeführt und Binderlösung über die Leitungen 36 eingesprüht und dabei gleichzeitig kontinuierlich fertiges Granulat im Bereich 30 des Pelletiertellers ausgetragen.

Das so gebildete Granulat wurde auf einen Feuchtegehalt von kleiner 10 % getrocknet.

### 1.2. Formgebung

56,9 g des Granulats wurden in eine Preßform mit einem Durchmesser von 60 mm überführt und mittels einer hydraulischen Presse bei einem Druck von 20 MPa auf eine Höhe von 13,6 mm verpreßt. Es ergab sich ein stabiler, transportfähiger Grünling.

### 1.3. Pyrolyse

Der zuvor erhaltene Grünling wurde der Preßform entnommen, in einen Pyrolyseofen überführt und mit einer Geschwindigkeit von 10 K/min auf 1 000°C unter einer Stickstoffatmosphäre erwärmt. Hierbei wurden die organischen Binderbestandteile zu Kohlenstoff abgebaut. Der resultiertende poröse Formkörper hatte ein Gewicht von 55,8 g und eine Porosität von 39 %.

### 1.4. Schmelzinfiltrierung

Ein nach 3. erhaltener carbonisierter Formkörper mit einer Masse von 20 g wurde in einen mit Bornitrid beschichteten GraphitTiegel überführt und mir 22 g eines Legierungsgranulats einer FeSi-Legierung bestehend aus 75 Gew.-% Si und 25 Gew.-% Fe überschichtet und im Vakuum mit 10 K/min auf 1 550°C erhitzt. Diese Temperatur wurde 30 Minuten gehalten. Danach erfolgte eine Abkühlung bis auf Raumtemperatur.

Mit diesem Verfahren ergab sich ein dichter, riß- und porenfreier Formkörper mit einer Dichte von 3,1 g/cm³, der in seinen äußeren geometrischen Abmessungen dem des vorgelegten Formkörpers entsprach.

Anstatt den Formkörper unmittelbar in einen mit Bornitrid beschichteten Graphittiegel 20 einzulegen, kann alternativ auch gemäß Fig. 1 in der Ofenkammer 12 eines Reaktionssinterofens 10 eine poröse SiC-Chargierplatte 16 verwendet werden, die auf Füßen 18 in der Schmelze 22 des mit Bornitrid beschichteten Graphittiegels 20 steht oder über poröse Dochte damit verbunden ist. Hierbei kann eine größere Menge an Granulat zur Erzeugung der Schmelze 22 in den Tiegel 20 eingegeben werden, da die Schmelze 22 über die porösen Füße 18 und die poröse Chargierplatte 16 von unten in den Formkörper 14 aufsteigt.

### Beispiel 2

Ein Grünling wurde wie zuvor beschrieben durch Aufbaugranulation und anschließendes Verpressen hergestellt und in einem Pyrolyseofen in der zuvor beschriebenen Weise der Pyrolyse unterzogen.

Der so erhaltene Formkörper mit einer Masse von 20 g wurde wiederum in einem mit Bornitrid beschichteten Graphittiegel überführt und mit 22 g einer Legierungsgranulat-Mischung aus 19 g einer FeSi-Legierung bestehend aus 75 Gew.-% Si und 25 Gew.-% Fe, der 3 g FeCr (65 Gew.-% Chrom) zugesetzt war, überschichtet und im Vakuum mit 10 K/min auf 1 700°C erhitzt. Diese Temperatur wurde 30 Minuten gehalten. Danach erfolgte eine Abkühlung bis auf Raumtemperatur.

Über dieses Verfahren ergab sich ein dichter, riß- und porenfreier Formkörper mit einer Dichte von 3,2 g/cm³, der in seinen äußeren geometrischen Abmessungen dem des vorgelegten Formkörpers entsprach.

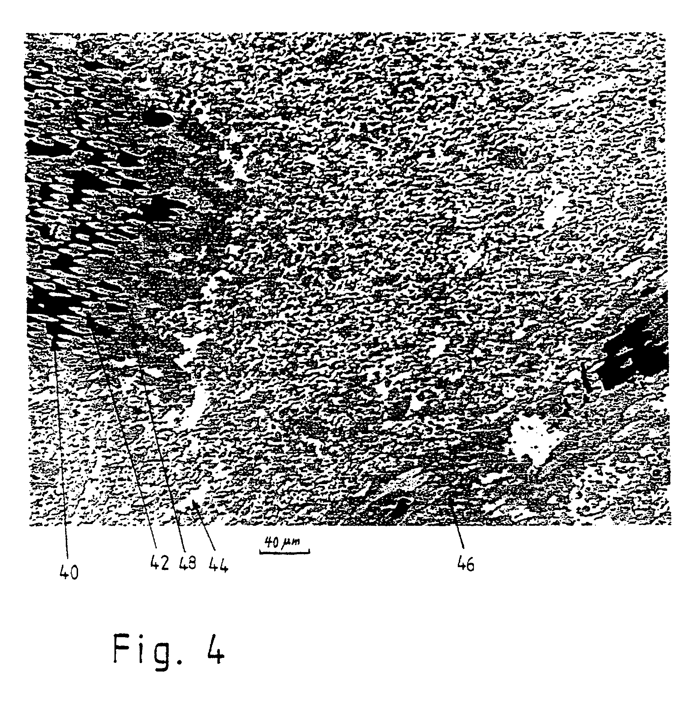

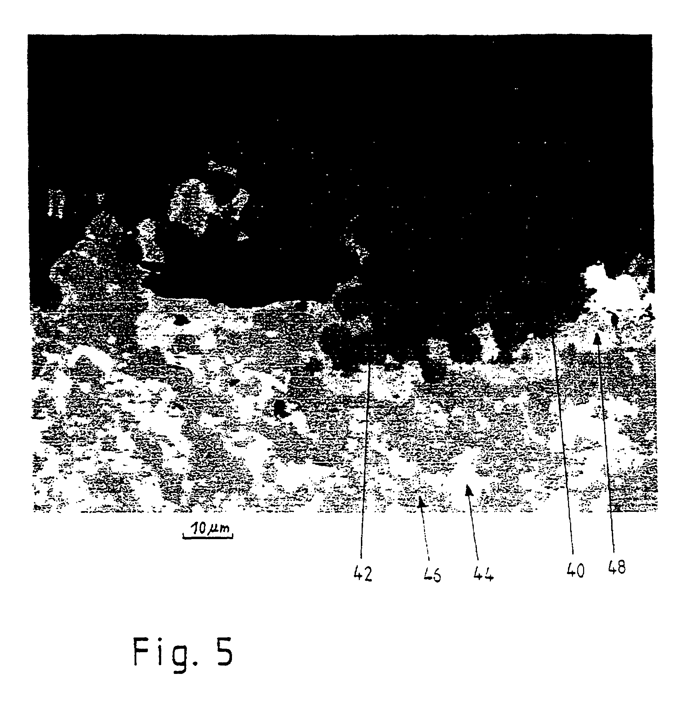

In den Fig. 4 und 5 sind lichtmikroskopische Schliffbilder von Proben, die gemäß Beispiel 1 hergestellt wurden, dargestellt.

In Fig. 4 ist in der linken Bildhälfte ein C-Faserbündel zu erkennen, während in der rechten unteren Bildecke das nächste C-Faserbündel angeschnitten ist. Mit Ziffer 40 ist Kohlenstoff bezeichnet, der aus der Pyrolyse entstanden ist, während mit der Ziffer 42 C-Fasern bezeichnet sind. Am Rand des C-Faserbündels befindet sich Sekundär-SiC, das aus der Reaktion von Kohlenstoffasern mit Silizium entstanden ist und mit der Ziffer 48 bezeichnet ist.

Bei der hellen Phase, die mit der Ziffer 44 bezeichnet ist, handelt es sich um Silizium bzw. Si/Fe/Cr. Bei der dunkelgrauen mit 46 bezeichneten Phase handelt es sich um SiC.

In der vergrößerten Darstellung gemäß Fig. 5, in der ein Kohlenstoffaserbündel nahezu senkrecht angeschnitten ist, sind die einzelnen C-Fasern gut zu erkennen. Auch ist das Sekundär-SiC, das aus der Reaktion von C-Fasern entstanden ist und mit der Ziffer 48 bezeichnet ist, gut zu erkennen.

Es ist ohne weiteres ersichtlich, daß die Kohlenstoffbündel nahezu vollständig unversehrt erhalten sind und lediglich im Randbereich wenige der C-Fasern zu Sekundär-SiC umgewandelt sind.

Daraus erklärt sich die erhebliche Festigungssteigerung, die durch die schonende Behandlung der C-Faserstoffbündel bei der Aufbaugranulation und bei den nachfolgenden Verfahrensschritten erreicht wird.

## Patentansprüche

1. Schmelzinfiltrierte faserverstärkte Verbundkeramik mit hochwarmfesten Fasern, die mit einer Matrix auf Si-Basis reaktionsgebunden sind, wobei die Matrix mindestens einen Zusatz eines anderen Stoffes enthält,
**dadurch gekennzeichnet,**
**daß** die Matrix Zusätze von Eisen enthält.

2. Verbundkeramik nach Anspruch 1,
**dadurch gekennzeichnet,**
**daß** die Matrix Zusätze von Chrom, Titan, Aluminium, Nickel oder Molybdän als Passivierungsschichtbildner enthält.

3. Verbundkeramik nach einem der vorhergehenden Ansprüche,
**dadurch gekennzeichnet,**
**daß** die Matrix aus einer Siliziumlegierung hergestellt ist, die 0,5 bis 80 Gew.-% Eisen enthält.

4. Verbundkeramik nach Anspruch 3,
**dadurch gekennzeichnet,**
**daß** die Matrix aus einer Siliziumlegierung hergestellt ist, die 5 bis 50 Gew.-% Eisen enthält.

5. Verbundkeramik nach einem der vorhergehenden Ansprüche,
**dadurch gekennzeichnet,**
**daß** die Matrix aus einer Siliziumlegierung hergestellt ist, die 0,03 bis 40 Gew.-% Chrom enthält.

6. Verbundkeramik nach einem der vorhergehenden Ansprüche,
**dadurch gekennzeichnet,**
**daß** die Matrix aus einer Siliziumlegierung hergestellt ist, die 1 bis 40 Gew.-% Chrom enthält.

7. Verbundkeramik nach einem der vorhergehenden Ansprüche,
**dadurch gekennzeichnet,**
**daß** die Matrix aus einer Siliziumlegierung hergestellt ist, die 1 bis 10 Gew.-% Chrom enthält.

8. Verbundkeramik nach einem der vorhergehenden Ansprüche,
**dadurch gekennzeichnet,**
**daß** die Fasern als C-Fasern oder SiC-Fasern ausgebildet sind.

9. Verbundkeramik nach einem der vorhergehenden Ansprüche,
**dadurch gekennzeichnet,**
**daß** die Fasern zu Faserbündeln zusammengefaßt und oberflächenimprägniert sind.

10. Verbundkeramik nach Anspruch 9,
**dadurch gekennzeichnet,**
**daß** die Fasern zu Kurzfaserbündeln zusammengefaßt sind.

11. Verbundkeramik nach Anspruch 10,
**dadurch gekennzeichnet,**
**daß** die Fasern aus C-Filamenten mit mittleren Durchmessern von etwa 5 bis 12 µm und einer Länge von etwa 2 bis 10 mm bestehen, die zu Faserbündeln von etwa 3000 bis 14000 Filamenten zusammengefaßt sind.

12. Verfahren zur Herstellung einer faserverstärkten Verbundkeramik mit hochwarmfesten Fasern, die mit einer Matrix auf Si-Basis reaktionsgebunden sind, gemäß Anspruch 1 umfassend die Schritte:
- Herstellen eines Grünlings aus Fasern unter Verwendung von Bindemitteln und Füllmitteln durch Wickeln, Laminieren oder Pressen;
- Pyrolyse des Grünlings unter Vakuum oder Schutzgas im Temperaturbereich von etwa 800°C bis 1200°C zur Herstellung eines porösen Formkörpers (14);
- Infiltration des porösen Formkörpers (14) mit einer Siliziumschmelze, die Zusätze von Eisen enthält.

13. Verfahren nach Anspruch 12,
bei dem die Siliziumschmelze Zusätze von Chrom, Titan, Aluminium, Nickel oder Molybdän als Passivierungsschichtbildner enthält.

14. Verfahren nach Anspruch 12 oder 13,
bei dem die Siliziumschmelze 0,5 bis 80 Gew.-% Eisen enthält.

15. Verfahren nach Anspruch 14,
bei dem die Siliziumschmelze 5 bis 50 Gew.-% Eisen enthält.

16. Verfahren nach einem der Ansprüche 12 bis, 15,
bei dem die Siliziumschmelze 0,03 bis 40 Gew.-% Chrom enthält.

17. Verfahren nach einem der Ansprüche 12 bis 16,
bei dem die Siliziumschmelze 1 bis 40 Gew.-% Chrom enthält.

18. Verfahren nach einem der Ansprüche 12 bis 17,
bei dem die Siliziumschmelze 1 bis 10 Gew.-% enthält.

19. Verfahren nach einem der Ansprüche 12 bis 18,
bei dem als Fasern C-Fasern oder SiC-Fasern verwendet werden.

20. Verfahren nach einem der Ansprüche 12 bis 19,
bei dem die Fasern zu Faserbündeln zusammengefaßt und oberflächenimprägniert werden.

21. Verfahren nach Anspruch 20,
bei dem die Fasern zu Kurzfaserbündeln zusammengefaßt werden.

22. Verfahren nach Anspruch 21,
bei dem Faserbündel verwendet werden, die aus etwa 3000 bis 14000 C-Filamenten mit mittleren Durchmessern von etwa 5 bis 10 µm und einer Länge von etwa 2 bis 10 mm gebildet werden.

23. Verfahren nach Anspruch 21 oder 22,
bei dem der Grünling durch Trocken- oder Warmfließpressen eines Granulates hergestellt wird.

24. Verfahren nach Anspruch 23,
bei dem das Granulat durch Aufbaugranulation hergestellt wird.

25. Verfahren nach Anspruch 24,
bei dem das Granulat kontinuierlich oder batchweise mit einer mittleren Partikelgröße von etwa 2 bis 6 mm hergestellt wird.

26. Verfahren nach einem der Ansprüche 12 bis 25,
bei dem bei der Herstellung des Grünlings kohlenstoffhaltige Füllmittel, vorzugsweise Ruß oder Graphit zugesetzt werden.

27. Verfahren nach einem der Ansprüche 12 bis 26,
bei dem bei der Herstellung des Grünlings Füllmittel in Form von Siliziden zugesetzt werden.

28. Verfahren nach einem der Ansprüche 24 bis 27,
bei dem zunächst eine Mischung aus Kurzfaserstoffbündeln und Füllmitteln trocken vorgemischt wird und anschließend in einem Pelletierteller (24) unter Zugabe von Bindemitteln zur Granulatherstellung gemischt wird.

29. Verfahren nach Anspruch 28,
bei dem das Granulat aus etwa 20 bis 60 Gew.-% SiC-Pulver, etwa 2 bis 20 Gew.-% Kohlenstoff in Form von Graphit- oder Rußpulver, etwa 10 bis 40 Gew.-% C-Faserbündeln (12K-Bündel) unter Einsprühen von etwa 15 bis 40 Gew.-% einer Binderlösung in einen Pelletierteller (24) hergestellt wird.

30. Verfahren nach Anspruch 29,
bei dem die Binderlösung eine wässrige Binderlösung ist, die 0,01 bis 10 Gew.-% Methylcelluloseester und Polyvinylalkohol enthält.

31. Verfahren nach einem der Ansprüche 24 bis 30,
bei dem das Granulat nach der Herstellung getrocknet und anschließend zum Grünling verpreßt wird.

32. Verfahren nach einem der Ansprüche 12 bis 31,
bei dem der Grünling in einem Pyrolyseofen unter Stickstoffatmosphäre auf etwa 950 bis 1050°C zur Herstellung des porösen Formkörpers erwärmt wird.

33. Verfahren nach einem der Ansprüche 12 bis 32,
bei dem der Grünling bei der Pyrolyse in einen Formkörper mit einer Porosität von etwa 30 bis 50 % überführt wird.

34. Verfahren nach einem der Ansprüche 12 bis 33,
bei dem der poröse Formkörper (14) mit einer Siliziumschmelze infiltriert wird, die etwa 10 bis 50 Gew.-% Eisen mit Rest Silizium enthält.

35. Verfahren nach einem der Ansprüche 12 bis 34,
bei dem der poröse Formkörper (14) mit einer Siliziumschmelze infiltriert wird, die etwa 10 bis 50 Gew.-% Eisen, 0,5 bis 10 Gew.-% Chrom mit Rest Silizium enthält.

## Claims

1. Melt infiltrated, fibre reinforced composite ceramic having fibres with high strength at elevated temperatures, the said fibres being bonded by reaction with a Si-based matrix, the matrix containing at least one addition of another substance,
**characterised in that**
the matrix contains additions of iron.

2. Composite ceramic according to Claim 1,
**characterised in that**
the matrix contains additions of chromium, titanium, aluminium, nickel or molybdenum as passivation film formers.

3. Composite ceramic according to the preceding claims,
**characterised in that**
the matrix is prepared from a silicon alloy containing 0.5 to 80 weight-% of iron.

4. Composite ceramic according to Claim 3,
**characterised in that**
the matrix is prepared from a silicon alloy containing 5 to 50 weight-% of iron.

5. Composite ceramic according to any of the preceding claims,
**characterised in that**
the matrix is prepared from a silicon alloy containing 0.03 to 40 weight % of chromium.

6. Composite ceramic according to any of the preceding claims,
**characterised in that**
the matrix is prepared from a silicon alloy containing 1 to 40 weight-% of chromium.

7. Composite ceramic according to any of the preceding claims,
**characterised in that**
the matrix is prepared from a silicon alloy containing 1 to 10 weight % of chromium.

8. Composite ceramic according to any of the preceding claims,
**characterised in that**
the fibres are carbon fibres or silicon-carbide fibres.

9. Composite ceramic according to any of the preceding claims,
**characterised in that**
the fibres are assembled into fibre bundles and impregnated at the surface.

10. Composite ceramic according to Claim 9,
**characterised in that**
the fibres are assembled into short fibre bundles.

11. Composite ceramic according to Claim 10,
**characterised in that**
the fibres consist of carbon filaments with average diameters of about 5 o 12 µm and a length of about 2 to 10 mm, which are assembled into fibre bundles of about 3 000 to 14 000 filaments.

12. Method for the production of a fibre reinforced composite ceramic having fibres with high strength at elevated temperatures, the said fibres being bonded by reaction with a Si-based matrix, according to Claim 1, the said method comprising the following steps:
- production of a green pre-form from fibres with the use of binders and fillers by winding, lamination or pressing;
- pyrolysis of the green pre-form under vacuum or inert gas in the temperature range from about 800°C to 1 200°C, to produce a porous pre-form (14);
- infiltration of the process pre-form (14) with a silicon melt containing additions of iron.

13. Method according to Claim 12,
in which the silicon melt contains additions of chromium, titanium, nickel or molybdenum as passivation film formers.

14. Method according to Claims 12 or 13,
in which the silicon melt contains 0.5 to 80 weight % of iron.

15. Method according to Claim 14,
in which the silicon melt contains 5 to 50 weight-% of iron.

16. Method according to any of Claims 12 to 15,
in which the silicon melt contains 0.03 to 40 weight-% of chromium.

17. Method according to any of Claims 12 to 16,
in which the silicon melt contains 1 to 40 weight-% of chromium.

18. Method according to any of Claims 12 to 17,
in which the silicon melt contains 1 to 10 weight-%.

19. Method according to any of Claims 12 to 18,
in which the carbon fibres or silicon-carbide fibres are used as the fibres.

20. Method according to any of Claims 12 to 19,
in which the fibres are assembled into fibre bundles and surface impregnated.

21. Method according to Claim 20,
in which the fibres are assembled into short fibre bundles.

22. Method according to Claim 21,
in which fibre bundles are used, which comprise about 3 000 to 14 000 carbon filaments having average diameters of about 5 to 10 µm and a length of approximately 2 to 10 mm.

23. Method according to Claims 21 or 22,
in which the green pre-form is made by dry pressing or by hot-flow-pressing a granulate.

24. Method according to Claim 23,
in which the granulate is prepared by additive granulation.

25. Method according to Claim 24,
in which the granulate is prepared continuously or in batches with an average particle size of about 2 to 6 mm.

26. Method according to any of Claims 12 to 25,
in which when preparing the green pre-form, fillers containing carbon, preferably carbon black or graphite, are added

27. Method according to any of Claims 12 to 26,
in which when preparing the green pre-form, fillers in the form of silicides are added

28. Method according to any of Claims 24 to 27,
in which a pre-mix of short fibre bundles and fillers is first formed dry, and then mixed in a pelleting dish (24) with the addition of binders to form a granulate.

29. Method according to Claim 28,
in which the granulate is made from about 20 to 60 weight-% of SiC powder, about 2 to 20 weight % of carbon in the form of graphite or carbon black powder, and about 10 to 40 weight-% of carbon-fibre bundles (12K bundles), by spraying on about 15 to 40 weight % of a binder solution in a pelleting dish (24).

30. Method according to Claim 29,
in which the binder solution is an aqueous binder solution containing 0.01 to 10 weight-% of methylcellulose ester and polyvinyl alcohol.

31. Method according to any of Claims 24 to 30,
in which once the granulate has been made, it is dried and then compressed to form the green pre-form.

32. Method according to any of Claims 12 to 31,
in which the green pre-form is heated in a pyrolysis furnace under a nitrogen atmosphere to about 950° to 1 050°C to produce the porous shaped body.

33. Method according to any of Claims 12 to 32,
in which during its pyrolysis the green pre-form is converted into a pre-form with porosity from about 30 to 50%.

34. Method according to any of Claims 12 to 33,
in which the porous pre-form (14) is infiltrated with a silicon melt containing about 10 to 50 weight-% of iron, the balance being silicon.

35. Method according to any of Claims 12 to 34,
in which the porous pre-form (14) is infiltrated with a silicon melt containing about 10 to 50 weight-% of iron and 0.5 to 10 weight-0% of chromium, the balance being silicon.

## Revendications

1. Céramique composite renforcée par des fibres, infiltrée par une masse fondue, avec des fibres résistant aux hautes températures, liées par une réaction à une matrice à base de Si, la matrice contenant au moins un appoint d'une autre substance,
**caractérisée en ce que**
la matrice contient comme additifs du fer.

2. Céramique composite selon la revendication 1, **caractérisée en ce que** la matrice contient, comme additifs, du chrome, du titane, de l'aluminium, du nickel ou du molybdène en tant que formateur d'une couche de passivation.

3. Céramique composite selon l'une des revendications précédentes, **caractérisée en ce que** la matrice est fabriquée à partir d'un alliage de silicium contenant de 0,5 à 80 % en poids de fer.

4. Céramique composite selon la revendication 3, **caractérisée en ce que** la matrice est fabriquée à partir d'un alliage de silicium contenant de 5 à 50 % en poids de fer.

5. Céramique composite selon l'une des revendications précédentes, **caractérisée en ce que** la matrice est fabriquée à partir d'un alliage de silicium, contenant de 0,03 à 40 % en poids de chrome.

6. Céramique composite selon l'une des revendications précédentes, **caractérisée en ce que** la matrice est fabriquée à partir d'un alliage de silicium, contenant de 0,03 à 40 % en poids de chrome

7. Céramique composite selon l'une des revendications précédentes, **caractérisée en ce que** la matrice est fabriquée à partir d'un alliage de silicium, contenant de 1 à 10 % en poids de chrome

8. Céramique composite selon l'une des revendications précédentes, **caractérisée en ce que** les fibres sont réalisées sous la forme de fibres de C ou de fibres de SiC.

9. Céramique composite selon l'une des revendications précédentes, **caractérisée en ce que** les fibres sont regroupées en faisceaux de fibres et imprégnées en surface.

10. Céramique composite selon la revendication 9, **caractérisée en ce que** les fibres sont regroupées en faisceaux de fibres courtes.

11. Céramique composite selon la revendication 10, **caractérisée en ce que** les fibres sont constituées de filaments de C ayant un diamètre moyen d'environ 5 à 12 µm et une longueur d'environ 2 à 10 mm, regroupées en des faisceaux de fibres d'environ 3000 à 14000 filaments.

12. Procédé de fabrication d'une céramique composite renforcée par des fibres, comportant des fibres résistant aux hautes températures, liées par réaction à une matrice à base de Si, selon la revendication 1, comprenant les étapes consistant à :
- fabriquer une ébauche à partir de fibres en utilisant des liants et des charges, par des processus d'enroulement, laminage ou pressage ;
- effectuer une pyrolyse sous vide ou sous gaz protecteur de l'ébauche, dans la plage de température d'environ 800 °C à 1200°C, pour fabriquer un corps de forme (14) poreux ;
- infiltrer le corps de forme (14) poreux avec une masse fondue de silicium contenant des additifs du fer.

13. Procédé selon la revendication 12, pour lequel la masse fondue de silicium contient comme additifs du chrome, titane, aluminium, nickel ou molybdène, en tant que formateur de couche de passivation.

14. Procédé selon la revendication 12 ou 13, dans lequel la masse fondue de silicium Contenant de 0,5 à 80 % en poids de fer.

15. Céramique composite selon la revendication 14, dans lequel la masse fondue de silicium contient de 5 à 50 % en poids de fer.

16. Procédé selon l'une des revendications 12 à 15, pour lequel la masse fondue de silicium contient de 0,03 à 40 % en poids de chrome.

17. Procédé selon la revendication 12 à 16, **caractérisée en ce que** la masse fondue de silicium contient 1 à 40 % en poids de chrome.

18. Procédé selon la revendication 12 à 17, **caractérisée en ce que** la masse fondue de silicium contient 1 à 10 % en poids de chrome.

19. Procédé selon l'une des revendications 12 à 18, dans lequel on utilise comme fibres des fibres de C ou des fibres de SiC.

20. Procédé selon l'une des revendications 12 à 19, pour lequel les fibres sont regroupées en faisceaux de fibres et imprégnées en surface.

21. Procédé selon la revendication 20, pour lequel les fibres sont regroupées en faisceaux de fibres courtes.

22. Procédé selon la revendication 21, dans lequel on utilise des faisceaux de fibres constitués d'environ 3000 à 14000 filaments de C, d'un diamètre moyen d'environ 5 à 10 µm et d'une longueur d'environ 2 à 10 mm.

23. Procédé selon la revendication 21 ou 22, dans lequel l'ébauche est préparée par extrusion à sec ou a chaud d'un granulat.

24. Procédé selon la revendication 23, dans lequel le granulat est fabriqué par granulation structurelle.

25. Procédé selon la revendication 24, dans lequel le granulat est préparé de façon continue ou par lots avec une taille de particule moyenne d'environ 2 à 6 mm.

26. Procédé selon l'une des revendications 12 à 25, dans lequel lors de la préparation de l'ébauche, on ajoute des charges contenant du carbone de préférence de la suie ou du graphite.

27. Procédé selon l'une des revendications 12 à 26, dans lequel lors de la préparation de l'ébauche on ajoute des charges se présentant sous la forme de siliciures.

28. Procédé selon l'une des revendications 24 à 27, dans lequel d'abord on prémélange à sec un mélange constitué de faisceaux de fibres courtes et de charges, puis on mélange dans un plateau de formation de boulettes (24) avec addition de liants pour préparer des granulats.

29. Procédé selon la revendication 28, dans lequel le granulat est fabriqué à partir d'environ 20 à 60 % en poids de poudre de SiC, d'environ 2 à 20 % en poids de carbone se présentant sous la forme de poudre de graphite ou de suie, d'environ 10 à 40 % en poids de faisceaux de fibres (faisceau 12K) avec injection d'environ 15 à 40 % en poids d'une solution de liant dans un plateau de formation de boulettes (24).

30. Procédé selon la revendication 29, dans lequel la solution de liant est une solution de liant aqueuse contenant de 0,01 à 10 % en poids de méthyl cellulose ester et d'alcool polyvinylique.

31. Procédé selon l'une des revendications 24 à 30, dans lequel le granulat est séché après préparation, puis pressé pour donner une ébauche.

32. Procédé selon l'une des revendications 12 à 31, dans lequel l'ébauche est chauffée dans un four de pyrolyse sous une atmosphère d'azote à une température d'environ 950 à 1050 °C, pour produire le corps de forme poreux.

33. Procédé selon l'une des revendications 12 à 32, dans lequel lors de la pyrolyse l'ébauche est transformée en un corps de forme ayant une porosité d'environ 30 à 50 %.

34. Procédé selon l'une des revendications 12 à 33, dans lequel le corps de forme (14) poreux est infiltré par une masse fondue de silicium contenant environ 10 à 50 % en poids de fer, le reste étant du-silicium.

35. Procédé selon l'une des revendications 12 à 34, dans lequel le corps de forme (14) poreux est infiltré par une masse fondue de silicium contenant environ 10 à 50 % en poids de fer, 0,5 à 10 % en poids de chrome, le reste étant du silicium.
